# EUROPEAN PATENT APPLICATION

(11) **EP 4 464 444 A1**
(43) Date of publication of application: **20.11.2024**
(21) Application number: 24175964.6
(22) Date of filing: 15.05.2024
(51) Int. Cl.: B23C 3/35, B23C 5/10, B23C 5/12, B23C 5/20, B23C 5/28, B23Q 11/10

(54) **MACHINE FOR MANUFACTURING KEYS MADE OF METALLIC MATERIALS THAT ARE HARD AND DIFFICULT TO ENGRAVE AND CUT, AND MANUFACTURING METHOD THEREOF**

(30) Priority: 17.05.2023 IT 202300009930
(71) Applicant: Bucci Automations S.p.A., 48018 Faenza (RA) (IT)
(72) Inventor: CUSUMANO, Dario, 48018 Faenza RA (IT); VINCENZI, Nicolò, 48018 Faenza RA (IT)
(74) Representative: Modiano, Micaela Nadia

(57) **Abstract**

A machine (1) for manufacturing keys (A) made of metallic materials that are hard and difficult to engrave and cut, which comprises a frame provided with means (2) for supporting bands (B) to be machined and at least one milling cutter (3) configured to engrave a predefined contour on a surface of each band (B). The frame comprises at least one actuator configured to move at least one component selected from the means (2) and the milling cutter (3). The milling cutter (3) is a milling cutter (3) with inserts (4) and comprises an elongated main body (5) provided with at least two seats (6), each one configured for the fixing of at least one respective insert (4) which is made of a material with high hardness, at least superficial.

## Description

The present invention relates to a machine for manufacturing keys made of metallic materials that are hard and difficult to engrave and cut, such as for example stainless steel (and, generically, any material that has mechanical properties and chemical/physical properties similar to those of stainless steel), and to a manufacturing process thereof. The keys to which the present invention refers are keys adapted to be associated with locks and/or padlocks: inserting the key into the slot of the lock (and/or of the padlock) produces a preset alignment of the corresponding encoding pins (the ends of which abut against a specially-contoured surface of the key), allowing the opening (and closing) of the lock (and/or of the padlock). The term "lock" also encompasses any type of cylinder for conventional door or window frames.

This type of keys is generally made of alloys of copper and of copper and zinc (such as brass and nickel silver), although steel is also used for several applications.

Alloys of copper are materials that can be easily worked with traditional tools and tend not to be prone to degradation owing to oxidation or corrosion (in normal use), but they have low hardness and rigidity and therefore the key, after protracted use, may become subject to wear and/or deformations that could compromise its functionality.

Steel is a quite rigid and hard material, and for this reason keys made of steel are highly resistant to mechanical stresses and to wear; however, steel is prone to corrosive oxidation (the formation of rust) which can compromise its functionality.

Keys made of steel are generally subjected to surface plating (for example with nickel) in order to protect them from oxidation and corrosion, although the wear of the surface layer applied or the presence of scratches on the surface can still lead to oxidizing and/or corrosive phenomena.

Today the chemical elements Ni, Cr and Pb (present in all alloys of copper and copper/zinc and/or in their coatings) are considered damaging to human health under current regulations in the European Union (and also in other countries).

To overcome these drawbacks, it would be preferable to use lead-free brass or brass with an extremely low lead content, a material that is very difficult to work, or stainless steel, which does not require plating and which together with excellent mechanical properties also offers high resistance to corrosion.

Unfortunately, however, machines for manufacturing conventional keys cannot be used to machine stainless steel and/or other materials that are particularly difficult to cut and engrave, in that the respective machine tools become damaged in the course of such machining (owing to the superior mechanical properties of such materials, with respect to those normally used).

In particular, conventional milling cutters (which have a number of teeth comprised between 8 and 16, preferably 12) undergo perceptible deterioration even after very few production cycles.

Conventional milling cutters are called integral milling cutters and are constituted by a cylindrical body and by rings on which the cutters are directly provided.

Even with the adoption of milling cutters made of materials with exceptional surface hardness, it has been found that it is in any case impossible to sustain high production speeds, with consequent significant fall in productivity; this is without taking account of the fact that it would still be necessary to frequently replace even these milling cutters (in particular of circles on which the cutters are provided) made of special material (which moreover are of high-cost) owing to the inevitable wear.

Because the cutters are integrated in the ring arranged on the main body, the material needs to be both tough and strong, as an annular support, and also hard, in order to constitute the cutters; if it is desired, for example, to reach extremely high levels of hardness so as to obtain a cutting edge adapted to machine hard materials, then, since the support ring is made of the same material, it would be too brittle and would not withstand the stresses that would arise during the operation of the milling cutter, and it would break.

In conventional milling cutters it is necessary to have the cutters and the annular support integrated, so as to have a high number of cutters: the high number of cutters is necessary to reduce the advancement cutting force (because the removal of material is distributed over several cutters).

In any case the speed of machining achieved with machines that comprise integral milling cutters with many teeth (for example 10 or 12) on hard materials like stainless steel are enormously slower than speeds on copper alloys, and therefore productivity is generally poor.

In addition it should be noted that machining operations executed on copper alloys with integral milling cutters (with a high number of teeth with a cutting edge, for example 10 or 12) do not require lubrication and this is particularly advantageous in that it makes it possible to minimize the environmental impact of the machining and it generates chips that are dry and clean, which can be easily recycled.

Unfortunately this option is not feasible when machining stainless steel with conventional integral milling cutters, in that, in order to ensure acceptable machining speeds, it is necessary to remove heat from the cutters of the teeth of the milling cutter and from the material being machined.

The aim of the present invention is to solve the above-mentioned drawbacks, by providing a machine for manufacturing keys made of metallic materials that are hard and difficult to engrave and cut, which does not undergo a rapid degradation of its machine tools.

Within this aim, an object of the invention is to provide a machine for manufacturing keys made of metallic materials that are hard and difficult to engrave and cut in which the machine tools, when worn, can be rapidly and cheaply replaced with new tools.

Another object of the invention is to provide a machine for manufacturing keys that ensures a productivity comparable to that of traditional machines used for making keys out of copper alloys.

Another object of the invention is to provide a machine for manufacturing keys made of metallic materials that are hard and difficult to engrave and cut that makes it possible to execute precision machining of high quality.

Another object of the invention is to provide a machine for manufacturing keys made of metallic materials that are hard and difficult to engrave and cut in which replacing the machine tools, when worn, is not a burdensome operation.

Another object of the invention is to provide a machine for manufacturing keys made of metallic materials that are hard and difficult to engrave and cut in which replacing the worn machine tools is rapid and cheap.

Another object of the invention is to provide a method for manufacturing keys made of metallic materials that are hard and difficult to engrave and cut in which replacing the machine tools, when worn, is a rapid operation.

Another object of the invention is to provide a method for manufacturing keys made of metallic materials that are hard and difficult to engrave and cut that is adapted to ensure high productivity.

Another object of the invention is to provide a method for manufacturing keys made of metallic materials that are hard and difficult to engrave and cut that is adapted to ensure a long duration of the machine tools.

Another object of the invention is to provide a method for manufacturing keys made of metallic materials that are hard and difficult to engrave and cut that is adapted to ensure high precision and quality.

Another object of the present invention is to provide a machine for manufacturing keys made of metallic materials that are hard and difficult to engrave and cut and a manufacturing method thereof which are of low cost, easily and practically implemented, and safe in use.

This aim and these and other objects which will become better apparent hereinafter are achieved by a machine for manufacturing keys made of metallic materials that are hard and difficult to engrave and cut, of the type comprising a frame provided with means configured to support bands to be machined and at least one milling cutter configured to engrave a predefined contour on a surface of each band, said frame comprising at least one actuator configured to move at least one component selected from said means configured to support bands and said milling cutter, characterized in that said milling cutter is a milling cutter with inserts and comprises an elongated main body provided with at least two seats, each one configured for the fixing of at least one respective insert having at least one portion thereof made of a material comprising at least one component selected among tungsten carbide, titanium carbide, titanium carbonitride, alumina, aluminum and titanium nitride, tantalum carbide, Widia^{®}, Cermet, hardened and tempered steel, annealed steel, normalized steel, solubilized steel, high surface hardness metal alloys, ceramic compounds, carbon in diamond form, polycrystalline diamond, and combinations thereof.

Further characteristics and advantages of the invention will become better apparent from the detailed description that follows of a preferred, but not exclusive, embodiment of the machine for manufacturing keys made of metallic materials that are hard and difficult to engrave and cut and of the manufacturing method thereof, which is illustrated by way of non-limiting example in the accompanying drawings wherein:

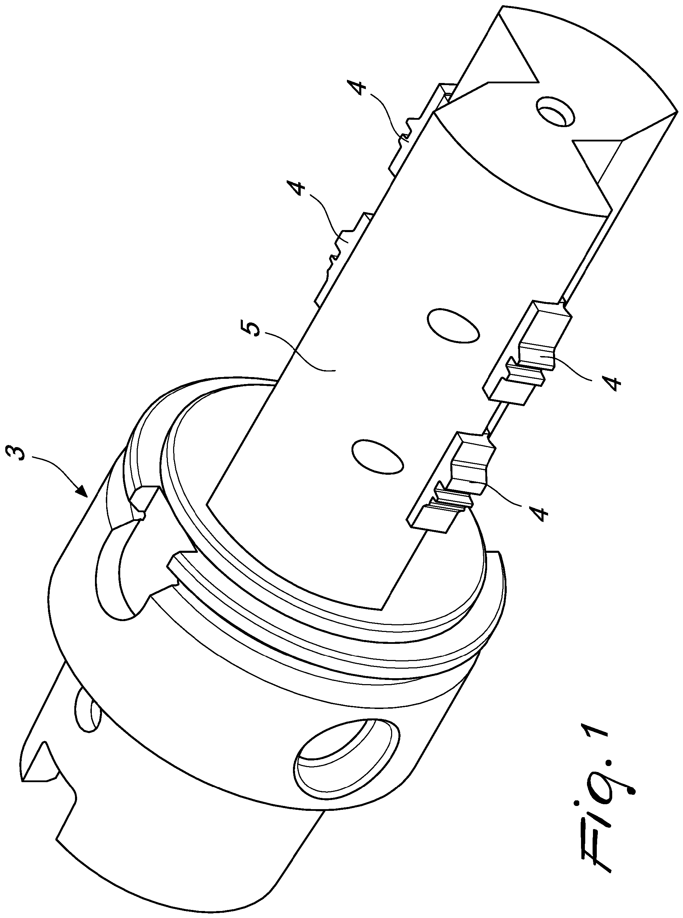

Figure 1 is a schematic perspective view of a possible embodiment of a milling cutter with inserts of a machine for manufacturing keys made of metallic materials that are hard and difficult to engrave and cut according to the invention;

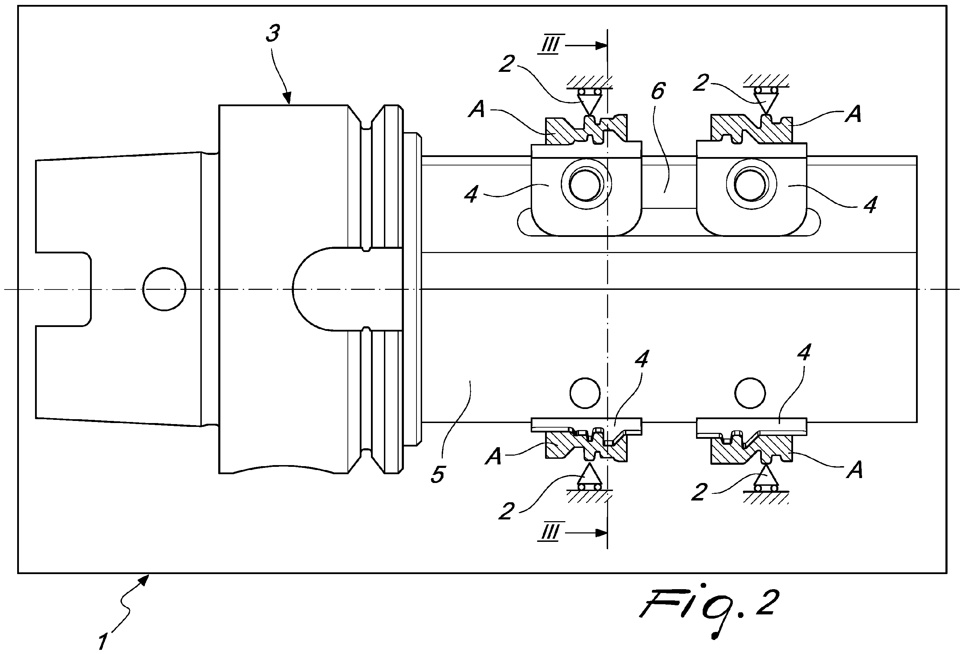

Figure 2 is a schematic side view of the milling cutter with inserts of Figure 1;

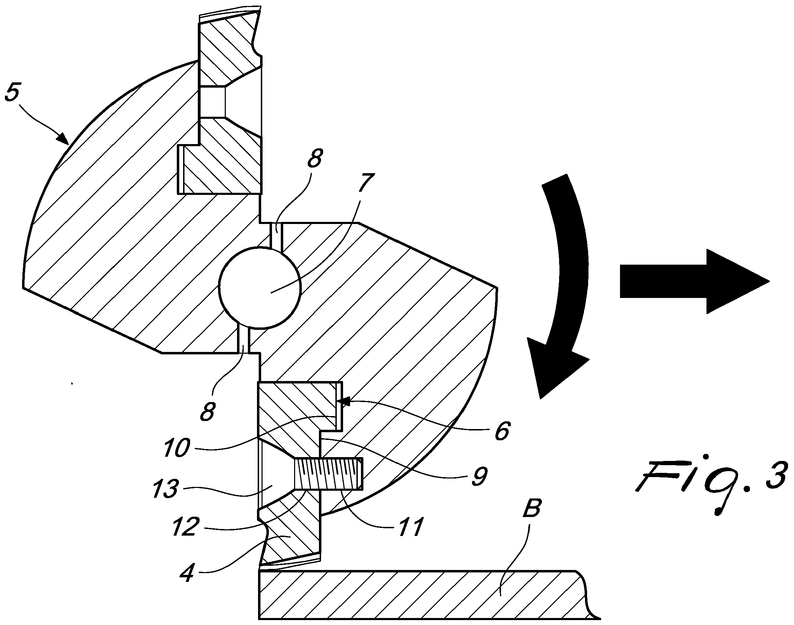

Figure 3 is a cross-sectional view taken along the line III-III traced in Figure 2;

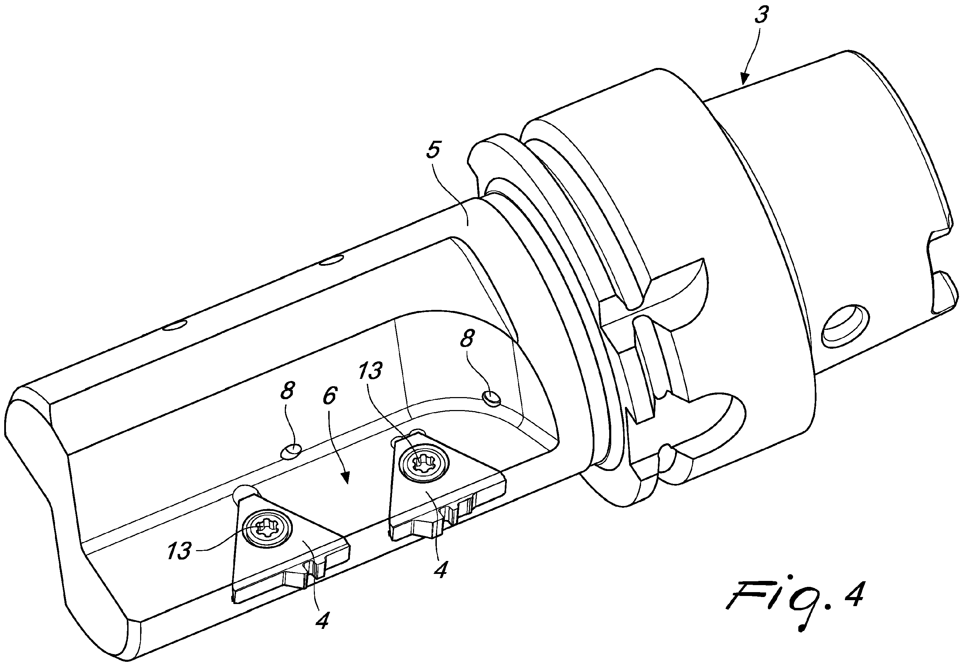

Figure 4 is a schematic perspective view of another embodiment of a milling cutter with inserts of a machine for manufacturing keys made of metallic materials that are hard and difficult to engrave and cut according to the invention;

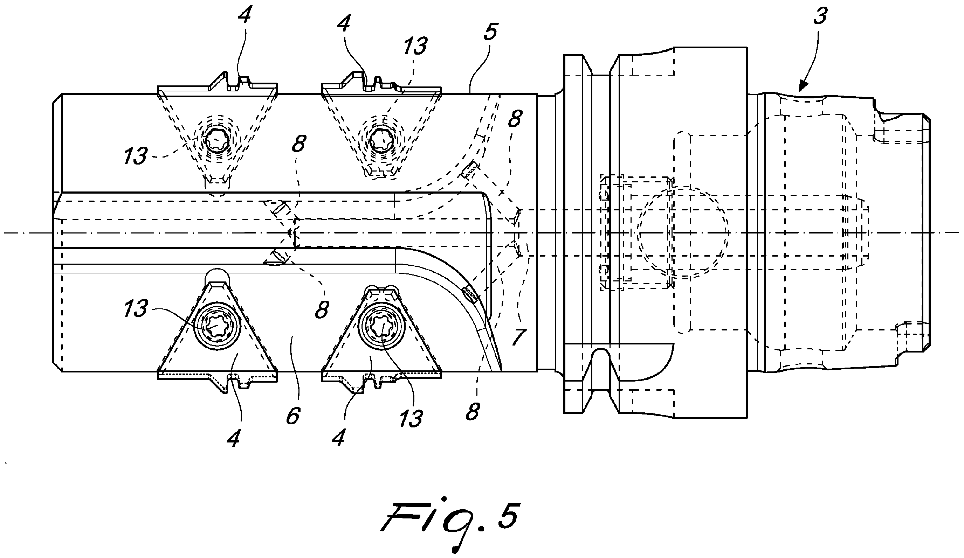

Figure 5 is a schematic side view of the milling cutter with inserts of Figure 4;

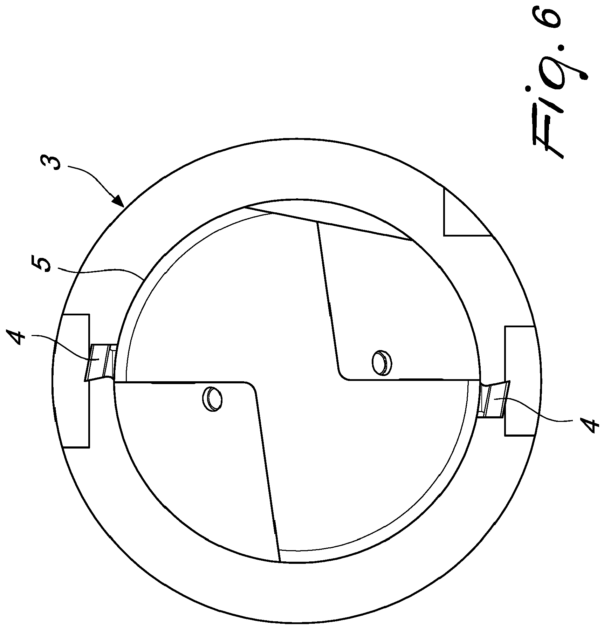

Figure 6 is a schematic front view of the milling cutter with inserts of Figure 4.

With reference to the figures, the reference numeral 1 generally designates a machine for manufacturing keys A made of metallic materials that are hard and difficult to engrave and cut.

Purely for the purposes of non-limiting example of the field of application of the present invention, it should be noted that, among the types of materials of interest for the present application, stainless steel is particularly important. In particular the types of stainless steel of interest for the present discussion include materials such as X6 Cr 17 steel (identified as AISI 430 and/or as Euronorm DIN 1.4016), X5 Cr Ni 18 10 steel (identified as AISI 304 and/or by Euronorm DIN 1.4301), X30 Cr 13 steel (identified as AISI 420B and/or as Euronorm DIN 1.4028), X15 Cr 13 steel (identified as AISI 420 and/or as Euronorm DIN 1.4024). In any case, the possibility is not ruled out of using the machine 1 according to the invention and the manufacturing method thereof also for making keys out of different types of stainless steel that may be suitable for this application owing to their hardness, toughness and strength.

Other materials of potential interest are copper alloys (such as for example brass) that are free from lead or which have a minimal lead content. The possibility is not ruled out in any case of applying the present invention on alloys of chromium, alloys of cobalt, alloys of nickel, alloys containing rare earth elements, alloys of tungsten, alloys of titanium and, in general, materials that have a hardness (on the Mohs scale) of not less than 3 degrees (the Mohs scale is a parametrization used to classify materials based on their hardness and is graduated with numbers from 1 to 10; one of the hardest substances on Earth, diamond, is graded 10 degrees on the Mohs scale, while plastically deformable materials and pencil lead, for example, have a hardness of 1 degree).

The machine 1 according to the invention will be particularly indicated for manufacturing keys A constituted by alloys that do not contain heavy metals (or components that are considered hazardous to health and/or the environment).

The machine 1 according to the invention comprises a frame provided with means 3 configured to support bands to be machined (adapted to be conveniently contoured in order to assume the shape and dimensions of the key A to be manufactured) and at least one milling cutter 3 configured to engrave a predefined contour on a surface of each band B (in particular it should be noted that the cutting edge of the milling cutter will have shape and dimensions complementary to those of the contour of the key A that it is adapted to provide).

The frame of the machine 1 will further comprise at least one actuator configured to move at least one component selected from the means 2 configured to support bands and the milling cutter 3.

According to the invention the milling cutter is advantageously a milling cutter with inserts 4 and comprises an elongated main body 5 provided with at least two seats 6.

Each seat 6 will conveniently be configured to fix at least one respective insert 4 which has at least one portion thereof made of a material comprising at least one component selected among tungsten carbide, titanium carbide, titanium carbonitride, alumina, aluminum and titanium nitride, tantalum carbide, Widia^{®}, cermet, hardened and tempered steel, annealed steel, normalized steel, solubilized steel, high surface hardness metal alloys, ceramic compounds, carbon in diamond form, polycrystalline diamond, and combinations thereof.

The portion of the insert 4 made of this material can be constituted solely by its outer covering, although the possibility is not ruled out of making the entire insert 4 of this material (and/or exclusively its parts that are designed to come into contact with the bands-B to be machined).

The milling cutter 3 will operate longitudinally on the bands B, removing material at each pass and thus forming the contour of the key A.

So each insert 4 will need to have, at least at its cutting edge (the end adapted to cut into the stainless steel bands in order to effect the corresponding contouring, so shaping them as keys A), a high hardness and therefore, at least in that portion, the material that constitutes the insert 4 will be selected from the materials having this characteristic (i.e. materials comprising at least one of the components listed previously).

With reference to an embodiment of undoubted practical and applicative interest, it should be noted that the machine 1 according to the invention can conveniently comprise at least one lubricating and cooling fluid dispenser which faces and is proximate to the abutment surface of the cutting edge of each insert 4 against the surface of a respective band B (to be machined in order to contour it like the key A of interest).

The dispensing of lubricant will determine a reduction in friction and therefore a more efficient machining and will make it possible to remove heat from the cutters of the inserts 4, as well as from the surface of the band B against which the cutters abut (in so doing removing material).

The main body 5 can advantageously comprise at least one internal channel 7 which leads to at least one respective dispensing nozzle 8 which faces outward proximate to each insert 4 for dispensing lubricating and cooling fluid toward the abutment surface of the cutting edge of each insert 4 against the surface of a respective band B.

The dispensing nozzle 8 can be arranged in a plurality of different configurations, in order to direct the jet with extreme precision in the desired area, so improving the lubrication and cooling effects produced by the fluid. The possibility is not ruled out either of having a plurality of nozzles, so that each one of them dispenses a stream of lubricant/coolant onto a specific portion of the insert 4 or of the band B.

If an integral milling cutter with many teeth were used, as is universally the case in the background art, it would be a very complex matter to have an internal channel to dispense lubricant/coolant, especially if the respective dispensing nozzles were to be facing each individual tooth: the consequence is that traditional integral milling cutters cannot have lubrication coming from inside the milling cutter and therefore they are less efficient and less well performing than the milling cutter 3 with inserts 4 envisaged in the present invention.

So as not to lose the advantage of working in a dry environment, dispensing lubricant fluid preferably would not occur using traditional methods, i.e. by flooding the region where the cutting operation occurs with a lubricant/coolant fluid, but rather by adopting the minimum lubrication method, in which the quantity of lubricant/coolant added to the machining, carried out with extreme accuracy and precision and measured exactly, evaporates during the cutting process, leaving the environment, the chips produced and the workpiece dry.

According to a particular embodiment of undoubted practical and applicative interest, the internal channel 7 defined in the main body 5 of the milling cutter 3 is connected to a lubricating and cooling fluid dispensing circuit which operates according to the technique known as "minimum quantity lubrication," abbreviated as MQL. This is a micro-lubrication technique which facilitates machining by chip removal even though it is executed almost dry.

This technique obsolesces the use of large quantities of cutting fluids (for example based on water and mineral oil) and replaces them with a small quantity of lubricant mixed with air. In machining assisted with minimum quantity lubrication technology, a small quantity of cutting fluid (for example 10-250 mL/h) is introduced into the interface region between the surface of the band B and the cutting edge of the insert 4 together with compressed air, which acts as a carrier, in substitution of several liters per hour of conventional lubricant/coolant.

The use of a small quantity of cutting fluid entails a lower consumption of the fluid and a reduction in the energy necessary for the lubrication, with consequent overall reduction of costs. The advantage of the minimum quantity lubrication technology lies in improving frictional behavior, which results in good control of the generation of heat (traditional lubrication uses great quantities of lubricating/cooling fluid to seek to remove as much heat as possible). This translates to a longer lifetime of the machine tool (i.e. of the insert 4) and to a good integrity of the surface of the key A obtained through the machining.

The chips generated during the machining assisted by the minimum quantity lubrication technology are almost dry and are therefore easy to recycle because they do not need to be washed and dried. And for the same reasons, the cut workpieces do not need to be washed and dried before their subsequent use. The cutting performance and the overall quality of the parts produced using the minimum quantity lubrication technology therefore depend on the optimization of the appropriate process parameters, including the type and flow rate of the lubricant and the position of the nozzle (as well as the corresponding dispensing pressure).

It should be noted that the machine 1 according to the invention can usefully comprise a refrigeration assembly operating at temperatures chosen between low temperatures (i.e. close to 0° C ± 10° C, but also even lower than this value) and cryogenic temperatures (therefore temperatures that are by way of indication lower than -150° C), configured to remove heat from the lubricating and cooling fluid prior to its dispensing. In the present discussion, the term "low temperatures" will be defined as temperatures that are close to 0° C ± 10° C, but also even lower than this value, and the term "cryogenic temperatures" will be defined as temperatures that are by way of indication lower than -150° C.

In this way the stream of fluid that will strike the abutment surface of the cutting edge of each insert 4 on the surface of the band B, cooled to extremely low temperatures, will be adapted to remove a high quantity of heat from those components, so improving the quality of the machining and preserving the cutting edge of the insert 4 from wear.

If the fluid, cooled to low temperatures or cryogenic temperatures, passes through the channel 7 and exits from the nozzles 8 present in the main body 5, then it will also cool the main body 5 which, by conduction, will contribute to cooling every entire insert 4 coupled in a respective seat 6 thereof.

It should be noted that the seats 6 that are provided in the main body 5 are angularly equidistant (for example if there are only two seats 6, they will be mutually opposite, i.e. 180° apart; if there are three seats 6, they will be 120° apart; if there are four seats 6, they will be 90° apart; and so on).

The seats 6 comprise a face 9 configured to juxtapose a corresponding facet 10 of at least one respective insert 4 and at least one threaded hole 11. Such hole 11 is arranged in alignment with a corresponding through channel 12 of the insert 4 when the facet 10 thereof is juxtaposed against the face 9 of the seat 6. The threaded hole 11 and the channel 12 are adapted to accommodate a threaded element 13 configured for the fixing of the insert 4 to the seat 6 of the main body 5.

It is important to note that the at least one actuator, configured to move at least one component selected from the means 2 configured to support bands B and the milling cutter 3, is configured to impose a cutting speed comprised between 1,700 m/min and 3,800 m/min and a feed rate of the milling cutter 3 with respect to the corresponding band B to be machined comprised between 1,000 and 2,000 mm/min (preferably 1,600 mm/min).

According to the current background art, the maximum cutting speeds advised by makers of machine tools and by the literature are less than 200 m/min for copper alloys and less than 100 m/min for stainless steel.

By cutting speed, what is meant is the speed of movement that causes chips to be detached, measured at the point (abutment surface of the cutting edge of the insert 4 against the band B) where the chip removal occurs.

The feed rate of the milling cutter 3 is the speed of movement of the milling cutter 3 with respect to the band B and can be obtained by multiplying the cutting speed by the rotation rate of the milling cutter 3.

The milling cutter with inserts 3 will be operatively associated with a respective drive motor, which will be configured (directly or through the interposition of motion transmission apparatuses that can vary the rotation rate of the components downstream of it with respect to the rotation rate of the motor) to impose a rotation rate on the milling cutter with inserts 3 comprised between 18,000 revolutions per minute and 30,000 revolutions per minute.

These operating parameters are outside the conventional nominal ranges indicated by the makers of milling cutters 3 (and of corresponding inserts 4) and by the literature.

However, in this particular application (a machine 1 for making keys A from stainless steel) it has been found experimentally that the machining process of the key A is extremely unusual, entailing very great depths of successive passes to remove material and, therefore, by virtue of the use of milling cutters 3 with inserts 4, it enables much greater cutting speeds than those reported in the literature (even 10 times greater), and this result is the fruit of a very long cycle of research and development activity. These results are further amplified by the use of MQL lubrication technology (illustrated previously). Such speeds are also made possible by virtue of the fact that the rigidity of the main body 5 (with respect to that of a conventional integral milling cutter with 12 or more cutters) is extremely high and therefore is not subject to dynamic vibrations or irregularities that could compromise the quality of the machining and subject the cutters of the inserts 4 to wear and tear. In fact the milling cutter 3 with inserts 4 can comprise a main body 4 made of material with high mechanical strength and adapted to damp vibrations, while the inserts 4 will have a high hardness (in particular concentrated at least on the respective cutting edge): the combination of these factors will make it possible to adopt high operating speeds which will ensure optimal productivity.

In order to circumscribe and clarify the advantages deriving from the use of a machine 1 according to the invention which comprises at least one milling cutter 3 with inserts 4 of the type described up to now, it should be made clear that currently, according to the background art in the sector, integral milling cutters are normally used so as to have multiple cutters, applying low advancement forces. The only theoretically possible way to reduce the advancement forces would be to greatly increase the cutting speed, but this option is not feasible based on the information available in the literature and based on the operating specifications of conventional milling cutters defined by their makers.

By contrast, the machine 1 according to the invention makes it possible, in the specific case of machining keys A using milling cutters 3 with inserts 4 (which comprise a cutting edge made with extremely hard material, an option made possible because it is different from the material from which the main body 5 is made), to reach extremely high cutting speeds (over 10 times the speeds envisaged for conventional milling cutters, both in the literature and in the indications of the respective makers). The advantages are such that it is possible to machine very hard metal alloys, such as for example stainless steel, with levels of performance that are identical to those with which conventional integral milling cutters machine traditional copper alloys for keys.

The machine 1 according to the invention is configured to be capable of bringing the milling cutter 3 with inserts 4 to extremely high rotation rates, tolerating the vibrations of such machining without sustaining any type of damage and, preferably, be provided with an MQL system (to use the minimum quantity of lubricant).

Furthermore, the materials used for the inserts 4 and the corresponding coatings that can be adopted are of exceptionally high quality and can be strictly localized in the cutting edge (and also be specifically selected as a function of the material that constitutes the bands B), an option that is not possible for integral milling cutters.

These factors make it possible to adopt the operating speeds mentioned above, which enable the machine 1 according to the invention to operate on bands B of stainless steel, to ensure a level of productivity similar to (and in some cases even higher than) that of conventional machines for machining copper alloys to make keys.

Up to now these performance levels were utterly unthinkable for making keys A in stainless steel.

The protection offered by the present invention also extends to a method for manufacturing keys A in stainless steel that comprises at least one first step of fixing stainless steel bands B to be machined onto respective means 2 configured to support them. Subsequently there is at least one second step of chip removal by means of a milling cutter 3 with inserts 4 which comprises at least one pair of substantially mutually opposite seats 6 for the accommodation of respective inserts 4.

During such second step the milling cutter 3 will rotate at a rate comprised between 18,000 revolutions per minute and 30000 revolutions per minute, with a cutting speed comprised between 1,700 m/min and 3,800 m/min and a feed rate with respect to the corresponding band B to be machined comprised between 1,000 and 2,000 mm/min (preferably 1,600 mm/min).

In order to ensure an optimal performance of the second step of the method, during that step lubricating and cooling fluid is dispensed towards the abutment surface of the cutting edge of each insert 4 against the surface of a respective band B.

In particular, this dispensing of lubricating and cooling fluid can occur through at least one respective dispensing nozzle 8, which faces outward proximate to each insert 4, and is connected to at least one internal channel 7 of the main body 5 of the milling cutter 3 with inserts 4.

This lubrication can be performed according to a method chosen from recirculated traditional lubrication (i.e. where the refrigerant fluid, after striking the abutment surface between the cutting edge of each insert 4 against the respective band B, is collected, conveyed and filtered for reuse), lubrication with the minimum quantity lubrication technique, abbreviated as MQL, recirculated traditional lubrication with fluid refrigerated to low temperatures or to cryogenic temperatures (i.e. where the fluid conveyance circuit is controlled by a refrigeration assembly operating at low or cryogenic temperatures), lubrication with the minimum quantity lubrication technique with fluid cooled to low or cryogenic temperatures (i.e. where, upstream of the channel 6, the ducts that convey the fluid are controlled by a refrigeration assembly operating at low or cryogenic temperatures) and the like.

Advantageously, the present invention solves the above-mentioned problems, by providing a machine 1 for making keys A made of metallic materials that are hard and difficult to engrave and cut, in which the cutters of the inserts 4 of the milling cutter 3 do not undergo rapid degradation. In fact, by virtue of the possibility of using inserts 4 made of a material with high hardness (or where just the cutters of the inserts 4 are made of material with high hardness, or have coatings of hard material) and by virtue of the adoption of an optimal lubrication method that also performs cooling (in particular using the minimum quantity lubrication technology), optionally also cooling the fluid used as lubricant/coolant to low temperatures or cryogenic temperatures, the cutting edge of the inserts 4 will preserve their characteristics for a long time, without wear or tear. Adopting the minimum quantity lubrication technology also makes it possible to minimize the consumption of lubricant (so greatly reducing the environmental impact of the machining compared to conventional techniques of making keys A from stainless steel) and to generate chips and shavings that are clean and dry and therefore can be recycled directly without requiring specific washing with aggressive solvents and detergents (as the minimum quantity of lubricant fluid used does not leave deposits thereof on the chips and shavings).

Conveniently the machine 1 according to the invention has cutters (the inserts 4 of the milling cutter 3) which, when worn, can be replaced with new cutters (inserts 4) rapidly and cheaply.

Conveniently the machine 1 according to the invention ensures a productivity comparable to that of traditional machines used for making keys out of copper alloys. This productivity, and the associated operating speeds, have never been achieved before in the machining of bands B of stainless steel (or other materials of high hardness) to manufacture keys A.

Advantageously the machine 1 according to the invention makes it possible to execute machining of high quality and precision: the rigidity of the main body 3 (much higher than can be achieved with a multi-cutting edge integral milling cutter of similar dimensions and adapted for the same type of machining) in fact makes it possible to operate at extremely high speeds without triggering vibrations or oscillations that could compromise the quality of the machining.

Profitably the machine 1 according to the invention ensures that the substitution of the machine tools (only the inserts 4), when worn, is not a burdensome operation. All the operator needs to do, in fact, is to unscrew the screws 13 and remove the inserts 4. This will not even require lengthy machine stops 1, in that the operator can immediately mount a replacement set of inserts 4 and then subject, even after a substantially long time, the cutters just dismounted for sharpening, so as to make them suitable again to be mounted on the milling cutter 3.

Usefully, in the method for manufacturing keys A made of metallic materials that are hard and difficult to engrave and cut according to the invention, the replacement of the machine tools (the inserts 4), when worn, is a rapid operation.

Positively the method according to the invention is adapted to ensure a high productivity.

Conveniently the method according to the invention is adapted to ensure a long duration of the machine tools (i.e. of the inserts 4).

Effectively the method according to the invention is adapted to ensure high precision and quality.

Positively the machine 1 and the method according to the invention are easily and practically implemented and are of low cost: such characteristics make the machine 1 and the method according to the invention innovations that are certain to be safe in use.

The invention thus conceived is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the contingent dimensions and shapes, may be any according to requirements and to the state of the art.

The disclosures in Italian Patent Application No. 102023000009930 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A machine for manufacturing keys (A) made of metallic materials that are hard and difficult to engrave and cut, of the type comprising a frame provided with means (2) configured to support bands (B) to be machined and at least one milling cutter (3) configured to engrave a predefined contour on a surface of each band (B), said frame comprising at least one actuator configured to move at least one component selected from said means (2) configured to support bands (B) and said milling cutter (3), **characterized in that** said milling cutter (3) is a milling cutter (3) with inserts (4) and comprises an elongated main body (5) provided with at least two seats (6), each one configured for the fixing of at least one respective insert (4) having at least one portion thereof made of a material comprising at least one component selected among tungsten carbide, titanium carbide, titanium carbonitride, alumina, aluminum and titanium nitride, tantalum carbide, Widia^{®}, Cermet, hardened and tempered steel, annealed steel, normalized steel, solubilized steel, high surface hardness metal alloys, ceramic compounds, carbon in diamond form, polycrystalline diamond, and combinations thereof.

2. The machine according to claim 1, **characterized in that** it comprises at least one lubricating and cooling fluid dispenser which faces and is proximate to the abutment surface of the cutting edge of each insert (4) against the surface of a respective band (B).

3. The machine according to one or more of the preceding claims, **characterized in that** said main body (5) comprises at least one internal channel (7) which leads to at least one respective dispensing nozzle (8) which faces outward proximate to each insert (4) for dispensing lubricating and cooling fluid toward the abutment surface of the cutting edge of each insert (4) against the surface of a respective band (B).

4. The machine according to claim 3, **characterized in that** said internal channel (7) of said main body (5) is connected to a lubricating and cooling fluid dispensing circuit which operates according to the technique known as "minimum quantity lubrication," abbreviated as MQL.

5. The machine according to one or more of the preceding claims, **characterized in that** it comprises a refrigeration assembly operating at temperatures chosen between low temperatures, by way of indication close to 0°C or even lower, and cryogenic temperatures, configured to remove heat from said lubricating and cooling fluid prior to its dispensing.

6. The machine according to one or more of the preceding claims, **characterized in that** said seats (6) of said main body (5) are angularly equidistant and comprise a face (9) configured to juxtapose a corresponding facet (10) of at least one respective insert (4) and at least one threaded hole (11), which is arranged in alignment with a corresponding through channel (12) of said insert (4) when said facet (10) thereof is juxtaposed against the face (9) of said seat (6), in order to accommodate a threaded element (13) configured for the fixing of said insert (4).

7. The machine according to one or more of the preceding claims, **characterized in that** said at least one actuator configured to move at least one component selected from said means (2) adapted to support bands (B) and said milling cutter (3), is configured to impose a cutting speed comprised between 1,700 m/min and 3,800 m/min and a feed rate of 1,600 m/min of the milling cutter with respect to the corresponding band to be machined.

8. The machine according to one or more of the preceding claims, **characterized in that** said milling cutter (3) with inserts (4) is functionally associated with a respective drive motor configured to impose a rotation rate comprised between 18,000 revolutions per minute and 30,000 revolutions per minute on said milling cutter (3) with inserts (4).

9. A method for manufacturing stainless steel keys (A), **characterized in that** it comprises:
- at least one first step of fixing stainless steel bands (B) to be machined onto respective means (2) configured to support them;
- at least one second step of chip removal by means of a milling cutter (3) with inserts (4), comprising at least one pair of substantially opposite seats (6) for the accommodation of respective inserts (4), said milling cutter (3) rotating at a rate comprised between 18,000 revolutions per minute and 30,000 revolutions per minute and having a cutting speed comprised between 1,700 m/min and 3,800 m/min and a feed rate with respect to the corresponding band (B) to be machined comprised between 1,000 and 2,000 m/min.

10. The method according to claim 10, **characterized in that**, during said second step, lubricating and cooling fluid is dispensed towards the abutment surface of the cutting edge of each insert (4) against the surface of a respective band (B).

11. The method according to the preceding claim, **characterized in that** said dispensing of said lubricating and cooling fluid occurs through at least one respective dispensing nozzle (8), which faces outward proximate to each insert (4) and is connected to at least one internal channel (7) of the main body (5) of said milling cutter (3) with inserts (4) according to a method selected among recirculated traditional lubrication, lubrication with a method known as "minimum quantity lubrication," abbreviated as MQL, recirculated traditional lubrication with fluid cooled to temperatures selected between low temperatures, by way of indication close to 0°C or even lower, and cryogenic temperatures, lubrication with a method known as "minimum quantity lubrication" with fluid cooled to temperatures selected between low temperatures, by way of indication close to 0°C or even lower, and cryogenic temperatures, and the like.
